# EUROPEAN PATENT APPLICATION

(11) **EP 2 485 382 A1**
(43) Date of publication of application: **08.08.2012**
(21) Application number: 10818576.0
(22) Date of filing: 28.09.2010
(51) Int. Cl.: H02M 7/48, H02M 7/06

(54) **POWER CONVERTER**

(30) Priority: 28.09.2009 JP 2009221872
(71) Applicant: Daikin Industries, Ltd., Osaka-shi, Osaka 530-8323 (JP)
(72) Inventor: SEKIMOTO, Morimitsu, Kusatsu-shi Shiga 525-8526 (JP); HIBINO, Hiroshi, Kusatsu-shi Shiga 525-8526 (JP); TANIGUCHI, Tomoisa, Kusatsu-shi Shiga 525-8526 (JP); MAEDA, Toshiyuki, Kusatsu-shi Shiga 525-8526 (JP)
(74) Representative: HOFFMANN EITLE
(86) International application number: PCT/JP2010/005822
(87) International publication number: WO 2011/036899

(57) **Abstract**

The power converter (20) includes a diode rectifier (22) which rectifies alternating current power output from an alternating current power supply (10), a reactor (21) provided between the alternating current power supply (10) and the diode rectifier (22), an inverter circuit (24) to which power output from the diode rectifier (22) is directly supplied, and a capacitor (31) provided between power supply lines (12, 13) on a primary side of the diode rectifier (22).

## Description

### TECHNICAL FIELD

The present invention relates to power converters, specifically relates to measures for avoiding LC resonance.

### BACKGROUND ART

Inverter circuits have been known as power converters. The inverter circuits convert, by switching control, direct current power to variable voltage/variable frequency alternating current power with high efficiency.

In general, the inverter circuits include a diode rectifier, a smoothing capacitor, and an inverter connected together. The diode rectifier includes a bridge circuit in which a plurality of diodes are connected. The smoothing capacitor is for eliminating output voltage ripple of the diode rectifier. The inverter is configured by connecting three pairs of switching elements in parallel, each pair including two switching elements connected in series.

In the inverter circuit, a large-capacity electrolytic capacitor is used as a smoothing capacitor. Since the electrolytic capacitor is a relatively large and expensive element among the structural elements of the inverter circuit, the cost and the size of the inverter circuit are increased. Moreover, the lifetime of the inverter circuit is short since the lifetime of the electrolytic capacitor is short.

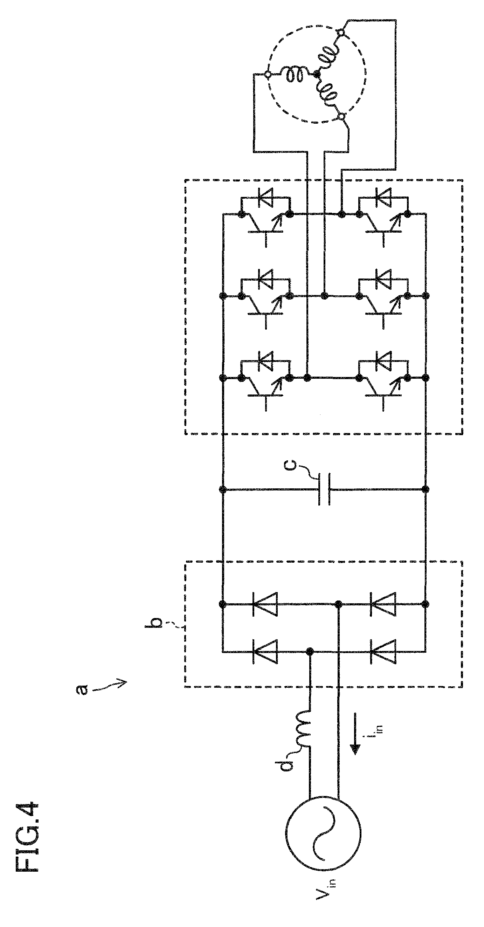

In view of the above problems, Patent Document 1 suggests a so-called capacitor-less inverter circuit in which power factor reduction problems and harmonic problems of a power supply side are solved by replacing the large-capacity smoothing capacitor which has been needed, with a small-capacity smoothing capacitor, and controlling a load side (such as a motor). Specifically, as shown in FIG. 4, the capacitor-less inverter circuit (a) is configured such that in place of a conventional large-capacity smoothing capacitor, a small-capacity smoothing capacitor (c) whose capacity is, for example, about tens of microfarads (µF) is provided to the output of the diode rectifier (b).

### CITATION LIST

### PATENT DOCUMENT

Patent Document 1: Japanese Patent Publication No. 2002-51589

### SUMMARY OF THE INVENTION

### TECHNICAL PROBLEM

In the capacitor-less inverter circuit (a) shown in Patent Document 1, a reactor (d) and the smoothing capacitor (c) are connected in series to form an LC resonant circuit. According to the capacitor-less inverter circuit (a), the LC resonance frequency is high because the capacity of the smoothing capacitor (c) is small.

In the diode rectifier (b), the conduction or non-conduction is changed by the switching of the diode rectifier (b). Thus, every time the diode rectifier (b) is switched to conduction, a voltage is applied between the smoothing capacitor (c) and the reactor (d), and a resonance phenomenon (LC resonance) occurs.

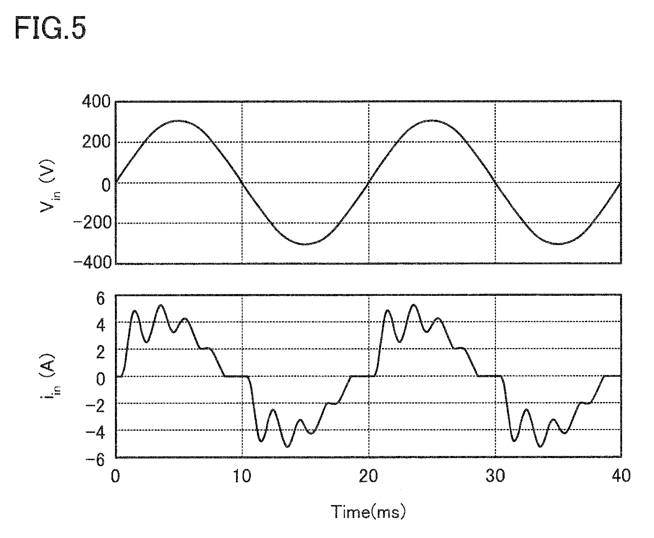

Thus, as shown in FIG. 5, the current of the capacitor-less inverter circuit (a) is significantly distorted due to the effect of the resonance phenomenon (LC resonance) between the reactor (d) and the smoothing capacitor (c). Accordingly, harmonics of the power supply increase.

The present invention was made in view of the above problem, and it is an objective of the invention to prevent a resonance phenomenon (LC resonance) between a capacitor and a reactor of a capacitor-less inverter circuit.

### SOLUTION TO THE PROBLEM

The first aspect of the present invention is a power converter including: a rectifier circuit (22) which rectifies alternating current power output from an alternating current power supply (10); a reactor (21) provided between the alternating current power supply (10) and the rectifier circuit (22); an inverter circuit (24) to which power output from the rectifier circuit (22) is directly supplied; and a capacitor (31) provided between buses (12, 13) on a primary side of the rectifier circuit (22).

According to the first aspect of the present invention, alternating current power is output from the alternating current power supply (10). The rectifier circuit (22) rectifies the output alternating current power. The voltage output from the rectifier circuit (22) is directly supplied to the inverter circuit (24), with voltage variations due to the output voltage from the alternating current power supply (10) included. Then, the inverter circuit (24) converts the converted direct current power to alternating current power, and supplies it to a load. Voltage variations due to switching occur in the inverter circuit (24). The capacitor (31) does not absorb the voltage variations from the rectifier circuit (22), but absorbs the voltage variations due to switching of the inverter circuit (24).

Here, according to the conventional capacitor-less inverter circuit, a resonant circuit is provided between the capacitor and the reactor, and therefore, a resonance phenomenon (LC resonance) occurs at the moment when a voltage is applied between the capacitor and the reactor. Further, in the diode rectifier, the conduction or non-conduction is changed by the switching of the diode. Thus, every time the diode is switched to conduction, a voltage is applied between the capacitor and the reactor, and a resonance phenomenon (LC resonance) occurs.

On the other hand, according to the first aspect of the present invention, the capacitor (31) is provided on the primary side (i.e., the input side) of the rectifier circuit (22). Thus, a voltage is always applied between the reactor (21) and the capacitor (31) regardless of the switching between the conduction and non-conduction of the rectifier circuit (22). Accordingly, in the power converter of the first aspect of the present invention, a resonance phenomenon (LC resonance) occurs only at the moment when the voltage is applied between the reactor (21) and the capacitor (31), and the resonance is attenuated thereafter. This means that the power converter (20) is not affected by the switching between the conduction and non-conduction of the rectifier circuit (22), and therefore the effects of the resonance phenomenon (LC resonance) between the reactor (21) and the capacitor (3 1) are reduced.

The second aspect of the present invention is that in the first aspect of the present invention, a capacity of the capacitor (31) is such that a voltage variation from the rectifier circuit (22) is not absorbed, and a voltage variation due to switching of the inverter circuit (24) is absorbed.

According to the second aspect of the present invention, alternating current power is output from the alternating current power supply (10). The rectifier circuit (22) rectifies the output alternating current power. The voltage output from the rectifier circuit (22) is directly supplied to the inverter circuit (24), with voltage variations due to the output voltage from the alternating current power supply (10) included. Then, the inverter circuit (24) converts the converted direct current power to alternating current power, and supplies it to a load. Voltage variations due to switching occur in the inverter circuit (24). The capacitor (31) does not absorb the voltage variations from the rectifier circuit (22), but absorbs the voltage variations due to switching of the inverter circuit (24).

The third aspect of the present invention is that in the first or second aspect of the present invention, the rectifier circuit (22) includes a plurality of high speed switching diodes (23) which form a diode bridge circuit.

According to the third aspect of the present invention, alternating current power is output from the alternating current power supply (10). In the diode bridge circuit, a current flows when a voltage applied to the high speed switching diode (23) exceeds a predetermined threshold value, thereby rectifying the alternating current power output from the alternating current power supply (10). At this time, although a pulse current synchronized with the switching of the inverter circuit (24) flows to the diode bridge circuit, the switching loss is reduced since the high speed switching diodes (23) exhibit high responsivity.

The fourth aspect of the present invention is that in any one of the first to third aspects of the present invention, the capacitor (31) is provided between buses (12, 13) between the reactor (21) and the rectifier circuit (22).

According to the fourth aspect of the present invention, alternating current power is output from the alternating current power supply (10). The rectifier circuit (22) rectifies the output alternating current power. The voltage output from the rectifier circuit (22) is directly supplied to the inverter circuit (24), with voltage variations due to the output voltage from the alternating current power supply (10) included. Then, the inverter circuit (24) converts the converted direct current power to alternating current power, and supplies it to a load. Voltage variations due to switching occur in the inverter circuit (24). The capacitor (31) does not absorb the voltage variations from the rectifier circuit (22), but absorbs the voltage variations due to switching of the inverter circuit (24).

The capacitor (31) is provided between the reactor (21) and the rectifier circuit (22). Thus, a voltage is always applied between the reactor (21) and the capacitor (31) regardless of the switching between the conduction and non-conduction of the rectifier circuit (22). Accordingly, in the power converter of the first aspect of the present invention, a resonance phenomenon (LC resonance) occurs only at the moment when the voltage is applied between the reactor (21) and the capacitor (31), and the resonance is attenuated thereafter. This means that the power converter (20) is not affected by the switching between the conduction and non-conduction in the rectifier circuit (22), and therefore the effects of the resonance phenomenon (LC resonance) between the reactor (21) and the capacitor (31) are reduced.

### ADVANTAGES OF THE INVENTION

According to the present invention, the capacitor (31) is provided on the primary side of the rectifier circuit (22). Thus, it is possible to apply a voltage between the capacitor (31) and the reactor (21) regardless of the switching between the conduction and non-conduction of the rectifier circuit (22). On the other hand, in the conventional power converter, the conduction or non-conduction is changed by the switching of the diode of the rectifier circuit. Thus, every time the diode is switched to conduction, a voltage is applied between the capacitor and the reactor, and a resonance phenomenon (LC resonance) occurs.

According to the present invention, even if the conduction or non-conduction of the rectifier circuit (22) is changed, a voltage is always applied between the reactor (21) and the capacitor (31). Thus, a resonance phenomenon (LC resonance) occurs only at the moment when the voltage is applied between the reactor (21) and the capacitor (31), and the resonance is attenuated thereafter. This means that according to the present invention, the power converter (20) is not affected by the switching between the conduction and non-conduction of the rectifier circuit (22), and therefore the effects of the resonance phenomenon (LC resonance) between the reactor (21) and the capacitor (31) are reduced. Accordingly, harmonics of the alternating current power supply (10) can be avoided.

According to the second aspect of the present invention, a capacity of the capacitor (31) is such that a voltage variation from the rectifier circuit (22) is not absorbed, and a voltage variation due to switching of the inverter circuit (24) can be absorbed. Thus, it is possible to reduce the size and the cost of the capacitor (31). As a result, the size and the fabrication cost of the power converter itself can be reduced.

According to the third aspect of the present invention, the rectifier circuit (22) is configured to form a diode bridge circuit having a plurality of high speed switching diodes (23). Thus, the rectifier circuit (22) can respond quickly to the current. Accordingly, even if a pulse current flows to the rectifier circuit (22) in synchronization with the switching of the inverter circuit (24), the rectifier circuit (22) can respond quickly to the pulse current, and therefore the switching loss of the diodes can be reduced.

### BRIEF DESCRIPTION OF THE DRAWINGS

FIG. 1 shows a block diagram of a power converter according to the first embodiment.
FIG. 2 shows graphs of the supply voltage and the input current according to the first embodiment.
FIG. 3 shows a block diagram of a power converter according to the second embodiment.
FIG. 4 shows a block diagram of a conventional power converter.
FIG. 5 shows graphs of the supply voltage and the input current according to the conventional power converter.

### DESCRIPTION OF EMBODIMENTS

Embodiments of the present invention will be described in detail below with reference to the drawings.

### <First Embodiment of the Invention>

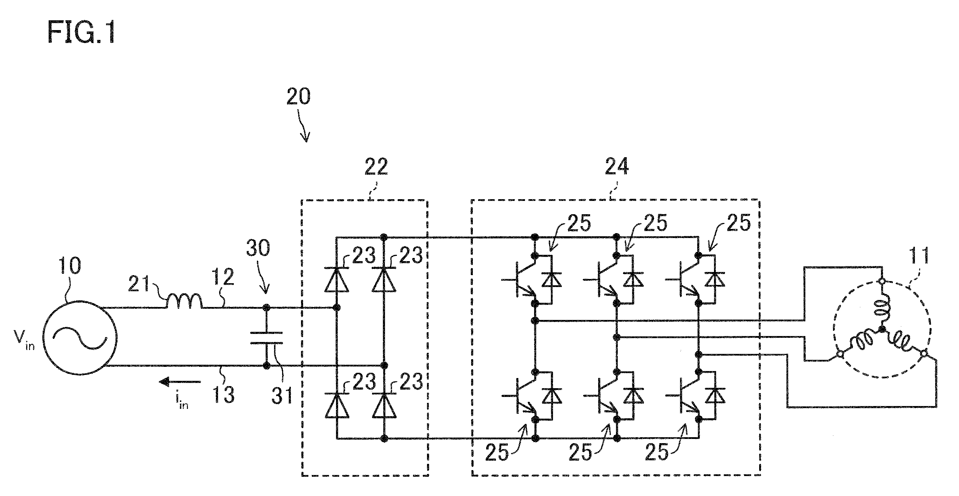

The first embodiment of the present invention will be described below. As shown in FIG. 1, a power converter (20) according to the first embodiment includes a reactor (21), a diode rectifier (22), a capacitor circuit (30), and an inverter circuit (24), which are connected together between power supply lines (12, 13), i.e., buses of the present invention. Further, the power converter (20) is connected to an alternating current power supply (10) which is a commercial power supply. The alternating current power supply (10) is a one-phase alternating current power supply.

The power converter (20) is used to actuate, for example, an electric motor (11) (hereinafter also referred to as a "motor") of a compressor provided in a refrigerant circuit of an air conditioner. Here, although not shown, the refrigerant circuit of the air conditioner is configured such that the compressor, a condenser, an expansion mechanism, and an evaporator are connected together to form a closed circuit, and a refrigerant circulates to perform a vapor compression refrigeration cycle. With this refrigerant circuit, the air cooled by the evaporator is supplied into a room during a cooling operation, and the air heated by the condenser is supplied into the room during a heating operation.

The diode rectifier (22) includes four high speed switching diodes (23) in a bridge configuration. The diode rectifier (22) provides full-wave rectification of the alternating current power output from the alternating current power supply (10), applies the rectified power between the power supply lines (12, 13), and serves as a rectifier circuit of the present invention. A pulse current synchronized with the switching of the inverter circuit (24) (described later) flows in the diode rectifier (22).

The high speed switching diodes (23) exhibit high responsivity to the pulse current.

The reactor (21) is provided on an input side (i.e., a primary side) of the diode rectifier (22).

The inverter circuit (24) is configured to receive the voltage rectified by the diode rectifier (22) and supply a three-phase current to the electric motor (11) (a motor), and forms an inverter circuit of the present invention. The inverter circuit (24) includes three transistors (upper-arm transistors) each having a collector connected to the power supply line (12), and three transistors (lower-arm transistors) each having an emitter connected to the power supply line (13). Each of the upper-arm transistors is paired with a corresponding one of the lower-arm transistors.

The capacitor circuit (30) includes a small-capacity capacitor (31) whose capacity is, for example, about tens of microfarads (µF). The capacitor (31) is, for example, a film capacitor. The capacitor (31) is connected between the power supply lines (12, 13) (i.e., buses) on the input side (i.e., the primary side) of the diode rectifier (22).

In other words, the small-capacity smoothing capacitor (C) is provided on the output side (i.e., a secondary side) of the diode rectifier (b) in the conventional so-called capacitor-less inverter (a) as shown in FIG. 4, but the capacitor (31) of the first embodiment is not located there, but is provided on the input side (i.e., the primary side) of the diode rectifier (22). The capacitor (31) is configured to have a small capacity such that although the capacitor (31) absorbs the voltage ripple caused by the switching of the inverter circuit (24), the capacitor (31) does not absorb the voltage ripple of the voltage output from the diode rectifier (22) and caused by the output voltage of the alternating current power supply (10). The voltage ripple represent voltage variations according to the present invention.

In the conventional so-called capacitor-less inverter (a), as shown in FIG. 4, the small-capacity smoothing capacitor (c) is provided on the output side (i.e., the secondary side) of the diode rectifier (b), and the reactor (d) and the smoothing capacitor (c) are connected together in series to serve as an LC resonant circuit. The conduction or non-conduction of the diode rectifier (b) is changed by the switching of the diodes. Thus, every time the diode is switched to conduction, a voltage is applied between the smoothing capacitor (c) and the reactor (d), and a resonance phenomenon (LC resonance) occurs. As a result, the LC resonance frequency is high in the capacitor-less inverter circuit (a), and thus, as shown in FIG. 5, the current (Iin) of the circuit is significantly distorted due to the effect of the resonance phenomenon (LC resonance) between the reactor (d) and the smoothing capacitor (c).

In contrast, the small-capacity capacitor (31) is provided on the primary side (i.e., the input side) of the diode rectifier (22) in the power converter (20) of the first embodiment. Thus, a voltage is always applied between the reactor (21) and the capacitor (31) regardless of the switching between the conduction and non-conduction of the diode rectifier (22).

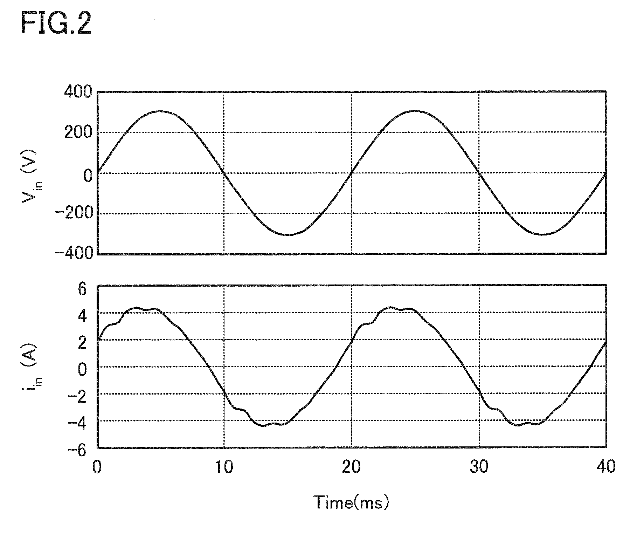

Accordingly, in the power converter (20), the resonance phenomenon (LC resonance) occurs only at the moment when the voltage is applied between the reactor (21) and the capacitor (31), and the resonance is attenuated thereafter. This means that the power converter (20) is not affected by the switching between the conduction and non-conduction operated by the high speed switching diode (23) of the diode rectifier (22), and therefore as shown in FIG. 2, the effects of the resonance phenomenon (LC resonance) between the reactor (21) and the capacitor (31) are reduced.

### -Advantages of First Embodiment-

According to the first embodiment, the capacitor (31) is provided on the primary side of the diode rectifier (22). Therefore, it is possible to always apply a voltage between the capacitor (31) and the reactor (21) regardless of the switching between the conduction and non-conduction operated by the high speed switching diode (23).

In the conventional power converter, the smoothing capacitor is provided on the secondary side (i.e., the output side) of the rectifier circuit. Therefore, every time the diode of the rectifier circuit is switched to conduction, a voltage is applied between the capacitor and the reactor, and a resonance phenomenon (LC resonance) occurs.

However, according to the first embodiment, a voltage is always applied between the reactor (21) and the capacitor (31) regardless of the switching between the conduction and non-conduction of the high speed switching diode (23). Accordingly, a resonance phenomenon (LC resonance) occurs only at the moment when the voltage is applied between the reactor (21) and the capacitor (31), and the resonance is attenuated thereafter.

In other words, according to the first embodiment, there is no effect from the switching between the conduction and non-conduction of the high speed switching diode. Therefore, it is possible to reduce the effect of the resonance phenomenon (LC resonance) between the reactor (21) and the capacitor (31). As a result, harmonics of the alternating current power supply (10) can be avoided.

Further, since the capacity of the capacitor (31) is such that the voltage ripple from the diode rectifier (22) is not absorbed and the voltage ripple due to switching of the inverter circuit (24) can be absorbed, the size and the cost of the capacitor (31) can be reduced. As a result, the size and the fabrication cost of the power converter (20) itself can be reduced.

Further, since the diode rectifier (22) includes a bridge circuit having the high speed switching diodes (23), the diode rectifier (22) can respond quickly to the current. Thus, even if a pulse current flows to the diode rectifier (22) in synchronization with the switching of the inverter circuit (24), the diode rectifier (22) can respond quickly to the pulse current. Accordingly, the switching loss of the diodes can be reduced.

### <Second Embodiment of the Invention>

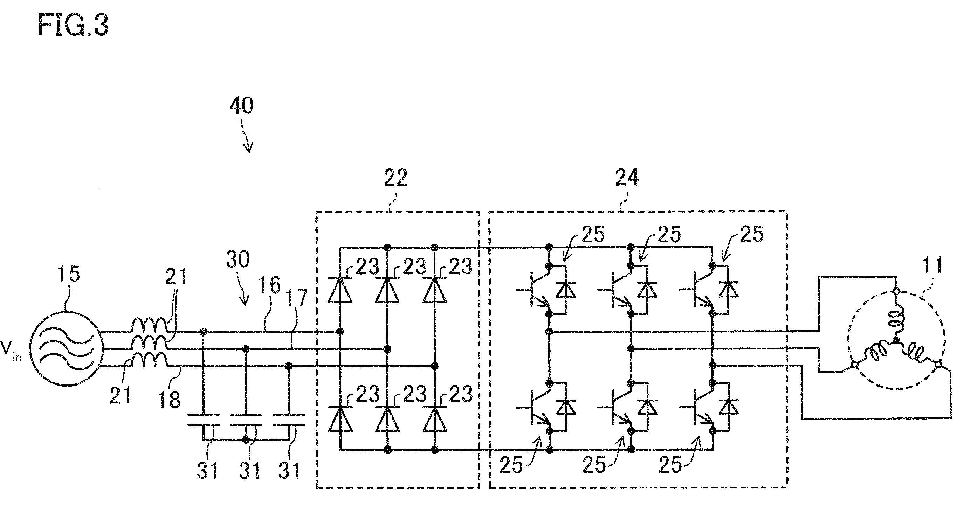

Next, the second embodiment of the present invention will be described. As shown in FIG. 3, the single-phase alternating current power supply (10) of the first embodiment is replaced with a three-phase alternating current power supply (15) in the second embodiment. The power converter (40) of the second embodiment is different from the power converter (20) of the first embodiment in the configurations of a reactor (21), a diode rectifier (22), and a capacitor circuit (30).

Specifically, the reactor (21) is provided to each of three input lines (16, 17, 18) connected to a three-phase alternating current power supply (15). The input lines (16, 17, 18) are buses according to the present invention.

The diode rectifier (22) includes six high speed switching diodes (23) connected in a bridge configuration. The diode rectifier (22) provides full-wave rectification of the alternating current power output from the three-phase alternating current power supply (15).

The capacitor circuit (30) includes capacitors (31) each of which is provided to a corresponding one of three lines extending from the input lines (16, 17, 18), and the three lines are connected to one another. The other configurations, operations, and advantages are similar to those in the first embodiment.

### <Other Embodiments>

The present invention may have the following structures in the first and second embodiments.

In the first and second embodiments, the present invention is applied to the power converter (20). However, the present invention is not limited to the power converter (20), and may be applied, for example, to a capacitor-less inverter circuit configured to include a series circuit of a resistance, a diode, and a capacitor provided on the output side (i.e., the secondary side) of a diode rectifier, and a small-capacity capacitor provided on the input side (i.e., the primary side) of the diode rectifier, or may be applied to a power converter having another configuration.

The foregoing embodiments are merely preferred examples in nature, and are not intended to limit the scope, applications, and use of the invention.

### INDUSTRIAL APPLICABILITY

As described above, the present invention is useful as measures for avoiding LC resonance of a power converter.

### DESCRIPTION OF REFERENCE CHARACTERS

- 10: alternating current power supply
- 12: power supply line
- 13: power supply line
- 21: reactor
- 22: diode rectifier
- 24: inverter
- 31: capacitor

## Claims

1. A power converter comprising:
a rectifier circuit (22) which rectifies alternating current power output from an alternating current power supply (10);
a reactor (21) provided between the alternating current power supply (10) and the rectifier circuit (22);
an inverter circuit (24) to which power output from the rectifier circuit (22) is directly supplied; and
a capacitor (31) provided between buses (12, 13) on a primary side of the rectifier circuit (22).

2. The power converter of claim 1, wherein
a capacity of the capacitor (31) is such that a voltage variation from the rectifier circuit (22) is not absorbed, and a voltage variation due to switching of the inverter circuit (24) is absorbed.

3. The power converter of claim 1 or 2, wherein
the rectifier circuit (22) includes a plurality of high speed switching diodes (23) which form a diode bridge circuit.

4. The power converter of any one of claims 1-3, wherein
the capacitor (31) is provided between buses (12, 13) between the reactor (21) and the rectifier circuit (22).
